# FASCICULE DE BREVET EUROPEEN

(11) **EP 0 998 382 B1**
(45) Date de publication et mention de la délivrance du brevet: **23.10.2002**
(21) Numéro de dépôt: 98939687.4
(22) Date de dépôt: 16.07.1998
(51) Int. Cl.: B29C 49/78

(54) **PROCEDE ET INSTALLATION DE FABRICATION DE RECIPIENTS PAR SOUFFLAGE D'EBAUCHES EN MATERIAU THERMOPLASTIQUE**
VERFAHREN UND INSTALLATION ZUM HERSTELLEN VON BEHÄLTERN DURCH BLASFORMEN VON VORFORMLINGEN AUS KUNSTSTOFF
METHOD AND INSTALLATION FOR MAKING CONTAINERS BY BLOWING THERMOPLASTIC BLANKS

(30) Priorité: 25.07.1997 FR 9709686
(43) Date de publication de la demande: 10.05.2000
(73) Titulaire: SIDEL S.A., 76053 Le Havre Cédex (FR)
(72) Inventeur: BUNEL, Christophe, F-76053 Le Havre Cedex (FR); MARTIN, Michel, F-76053 Le Havre Cedex (FR)
(74) Mandataire: Siloret, Patrick
(86) Numéro de dépôt international: FR9801553
(87) Numéro de publication internationale: WO99004951

(56) Documents cités:
- EP-A- 0 655 313
- EP-A- 0 754 537
- WO-A-96/25285
- DE-A- 3 111 925
- FR-A- 2 526 364
- US-A- 4 488 863
- US-A- 4 853 171

## Description

L'invention concerne des perfectionnements apportés lors de la fabrication de récipients en matériau thermoplastique, tels que des bouteilles, des pots, ou tout autre type de récipients, par soufflage, dans des moules de finition, d'ébauches préalablement extrudées ou injectées, ou bien encore constituées par des récipients intermédiaires obtenus lors d'une étape préalable de soufflage.

Il est connu divers procédés et installations pour fabriquer des récipients par soufflage d'ébauches en matériau thermoplastique.

Dans les installations dites d'extrusion-soufflage, les ébauches, appelées paraisons, sont obtenues par extrusion du matériau. A cet effet, un dispositif d'extrusion est associé à l'installation qui permet d'obtenir, soit séquentiellement, soit en continu, un tube. Ce tube est extrudé et amené par gravité ou par guidage à l'intérieur des moules de finition.

Ensuite, une longueur déterminée de tube est emprisonnée dans les moules de finition, puis un gaz sous pression, généralement de l'air, est insufflé dans les parties emprisonnées, permettant de les gonfler et de leur faire épouser la forme des cavités des moules et d'aboutir aux récipients souhaités.

Dans les installations dites d'injection-soufflage, les ébauches, appelées préformes, sont obtenues par injection du matériau dans un dispositif associé à, ou distinct de, l'installation. Les préformes se présentent sous la forme de tubes ouverts à l'une de leurs extrémités et fermés à l'autre. Les préformes sont introduites dans les cavités des moules de finition alors qu'elles sont à une température suffisante pour être soufflées. Ainsi, lorsque les préformes sont injectées dans un dispositif séparé de l'installation de soufflage, cette dernière comporte un four de réchauffage des préformes pour les ramollir et permettre le soufflage de récipients.

Il existe encore des installations mettant en oeuvre des étapes successives de soufflage : un récipient intermédiaire est formé dans un premier moule à partir d'une ébauche, puis est resoufflé dans un second moule. Le récipient intermédiaire est donc une ébauche vis-à-vis du récipient final.

Parmi les installations connues, qu'il s'agisse d'installations d'extrusion-soufflage ou d'installations d'injection-soufflage, il en est qui possèdent au moins deux moules qui sont animés d'un mouvement de défilement dans l'installation, de façon à défiler successivement dans une zone de chargement des ébauches dans les moules, dans une zone intermédiaire dans laquelle a lieu, entre autres, le soufflage des récipients et dans une zone d'éjection des récipients achevés.

De telles installations peuvent avoir de grandes cadences de production, puisque, pendant qu'un moule est en cours de chargement, un autre peut être en cours de soufflage et/ou un autre peut être en cours d'éjection.

En outre, l'installation ne nécessite qu'un seul dispositif de chargement et un seul dispositif d'éjection. Par ailleurs, de telles installations permettent une répétitivité du processus de fabrication et évitent des dispersions de production.

Il est bien entendu que plus le nombre de moules est important, plus les cadences peuvent être élevées.

Ainsi, à titre d'exemple, dans la gamme de machines produites par la demanderesse, il existe des machines d'injection-soufflage et des machines d'extrusion-soufflage dont les moules sont portés par un carrousel animé d'un mouvement continu de rotation. La présence de ce carrousel permet un défilement rapide; par ailleurs, cette technologie de machine tournante permet d'assurer un excellent synchronisme des opérations entre les divers organes de chaque machine ainsi constituée.

Par moule, au sens de la présente invention, il faut entendre un sous-ensemble comportant une ou plusieurs cavités. La ou les cavité(s) possèdent la forme extérieure du récipient à fabriquer. La demande de brevet français, au nom de la demanderesse, publiée sous le numéro 2 709 264, décrit une machine d'injection-soufflage dans laquelle chaque moule comporte au moins deux cavités (ou empreintes des récipients).

Par ébauche, il faut entendre préforme, paraison, récipient intermédiaire, c'est-à-dire plus généralement tout élément susceptible d'être transformé par soufflage en récipient (lui-même intermédiaire ou final).

De façon connue, la fabrication d'un récipient, en plus du chargement de l'ébauche et de l'éjection du récipient achevé, nécessite au minimum un soufflage, avec du gaz, généralement de l'air, sous pression élevée, et un dégazage avant l'éjection.

Dans certaines mises en oeuvre, perfectionnées, un flux supplémentaire de gaz sous pression est injecté après le dégazage partiel ou total, avant que le récipient intermédiaire ou final ne soit sorti de son moule de soufflage. L'injection de gaz est généralement effectuée à une pression inférieure à la pression de soufflage. Cette injection supplémentaire est effectuée notamment dans les procédés de soufflage par thermofixation, c'est-à-dire les procédés dans lesquels les récipients sont soufflés dans des moules très chauds. On a constaté que, de façon surprenante, cette injection supplémentaire permet d'obtenir des récipients ayant une résistance mécanique ou d'autres propriétés accrues lors de leurs utilisations.

Le document EP 0 406 146, sur lequel repose le préambule de la revendication 1 de procédé, décrit une mise en oeuvre de ce type.

Généralement, l'injection supplémentaire consiste en un balayage plutôt qu'en un resoufflage, c'est-à-dire en une circulation de gaz dans le récipient. A cet effet, pendant le balayage, le récipient est ouvert, au moins partiellement, à l'air libre, de façon à permettre cette circulation.

Un inconvénient des installations connues est qu'elles sont grandes consommatrices de gaz de soufflage. Le problème est encore accru lorsqu'une injection supplémentaire est appliquée. Ainsi, par exemple, dans les installations d'injection-soufflage produites par la demanderesse, l'air de soufflage est appliqué à la pression de 40 bars. Ceci signifie que le soufflage d'un récipient d'un litre nécessite quarante litres d'air, celui d'un récipient de deux litres nécessite quatre-vingt litres, etc...

L'injection supplémentaire, effectuée entre 10 et 20 bars, nécessite donc quant à elle entre 10 et 20 litres d'air pour un récipient d'un litre, 20 A 40 litres pour un récipient de 2 litres. Or il faut savoir que les machines de la demanderesse ont une cadence comprise entre approximativement 1 200 et 50 000 récipients par heure, ce qui correspond à une consommation théorique d'air sous pression comprise entre 66 000 et 2 750 000 litres d'air par heure pour fabriquer des récipients d'un litre avec une injection supplémentaire à 15 bars.

L'invention a pour objet un procédé dans lequel la consommation de gaz comprimé est réduite.

Selon l'invention, un procédé de fabrication de récipients, par soufflage, à l'aide de gaz sous une première pression (P1), en particulier de l'air, d'ébauches à l'intérieur de moules dans une installation comportant au moins deux moules dans lesquels les ébauches sont successivement introduites et les récipients sont successivement soufflés, la formation de chaque récipient comportant, après une étape de soufflage, une étape de dégazage au moins partiel suivie d'une étape au cours de laquelle du gaz sous une seconde pression (P2) est introduit dans le récipient, est caractérisé en ce que le gaz sous la seconde pression (P2) est constitué par une partie au moins du produit de dégazage d'au moins un récipient soufflé postérieurement dans l'installation.

Ainsi, la consommation de gaz sous pression est considérablement réduite. Par ailleurs, étant donné que l'injection supplémentaire de gaz est effectuée par transfert, il n'est pas nécessaire de prévoir de moyens pour produire le gaz supplémentaire sous pression : il suffit seulement de prévoir des interconnexions adaptées entre les différents moules. De ce fait, l'installation est simplifiée et son coût s'en trouve sensiblement réduit.

Par contre, et ceci est fondamental, les performances de l'installation ne sont pas réduites pour autant. En effet, comme indiqué plus haut à titre d'exemple, dans les machines de la demanderesse, l'injection supplémentaire s'effectue avec un gaz sous une pression comprise entre 10 et 20 bars, et de soufflage initial s'effectue à 40 bars. A supposer que l'injection supplémentaire consiste en un resoufflage à une pression moindre, il est possible, partant d'un récipient soufflé à 40 bars, en le dégazant dans un autre de même volume, lui-même déjà dégazé, d'obtenir une pression résiduelle de 20 bars dans chacun des récipients (Application de la loi de Mariotte).

Si, comme cela est le plus souvent le cas, l'injection supplémentaire consiste en un balayage du récipient, c'est-à-dire en une circulation de gaz dans le récipient en permettant au gaz de s'échapper à l'air libre pendant cette opération, alors la pression de balayage est susceptible de décroître de 40 bars à zéro pendant le balayage si le récipient suivant est totalement dégazé pour effectuer le balayage du précédent.

Selon une autre caractéristique, l'injection supplémentaire effectuée dans un récipient est faite à partir du récipient soufflé dans le moule suivant immédiatement dans l'installation.

Ainsi, les liaisons pneumatiques sont plus aisées à réaliser.

Dans une mise en oeuvre, lorsque l'installation comporte au moins trois moules, l'injection supplémentaire est effectuée en provoquant une introduction en cascade d'une partie du produit de dégazage de plusieurs récipients dans un autre.

Ceci crée un mouvement turbulent qui améliore encore l'efficacité du balayage.

Selon une autre caractéristique, dans un mode de réalisation, chaque moule comporte au moins deux cavités de soufflage, le produit de dégazage d'un récipient fabriqué dans une cavité d'un moule est transféré dans une cavité correspondante d'un moule précédent.

Ceci permet de faciliter le montage des liaisons pneumatiques, en évitant des « croisements » de conduites.

D'autres caractéristiques et avantages de l'invention apparaîtront à la lecture de la description qui suit faite en regard des figures annexées sur lesquelles :
- la figure 1 illustre le schéma de principe d'un mode de réalisation possible d'une installation pour la mise en oeuvre du procédé selon l'invention avec deux moules.
- La figure 2 illustre le principe de l'invention à une installation comportant plus de deux moules.

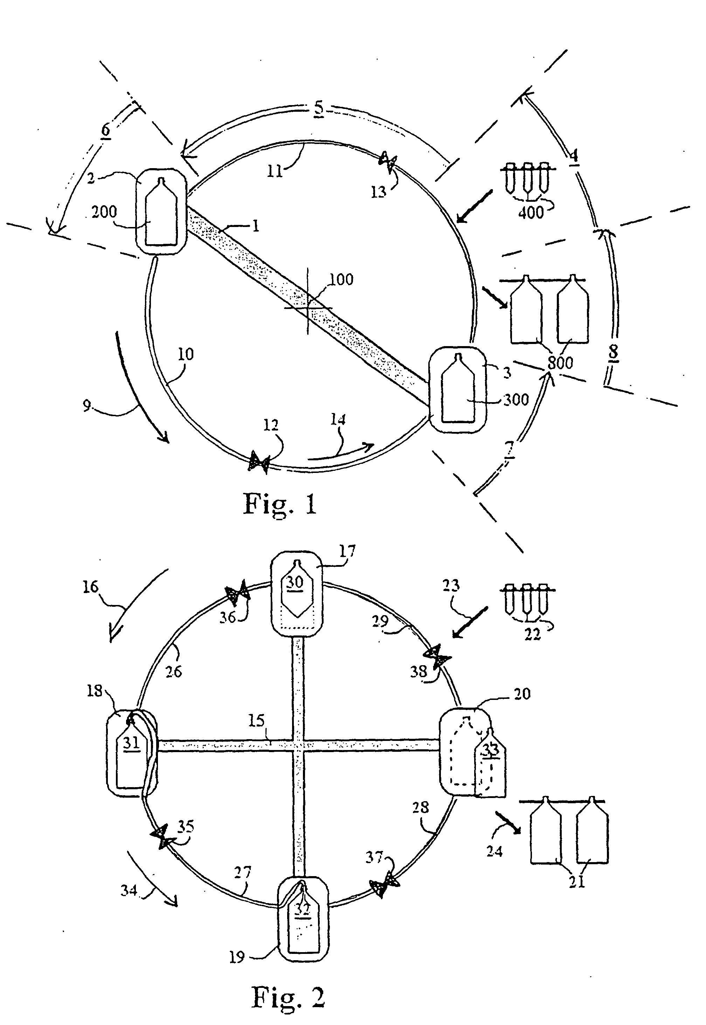

Dans l'exemple de la figure 1, l'installation est dite d'injection-soufflage, et comporte une structure 1 entraînant deux moules 2,3 sur un trajet le long duquel ils passent respectivement au moins dans une zone 4 de chargement des ébauches 400, ici des préformes, une zone 5 de soufflage (ou étirage-soufflage), une zone 6 de dégazage, une zone 7 d'injection du gaz à la seconde pression, et une zone 8 de déchargement des récipients (800) achevés.

Dans l'exemple illustré, la structure 1 d'entraînement des moules est, de façon connue, un carrousel porte-moules tournant autour d'un axe 100 de rotation. Ici, les moules sont diamétralement opposés par rapport à l'axe de rotation. D'une façon générale, ils sont uniformément répartis autour de cet axe. Le sens du mouvement de rotation du carrousel est illustré par la flèche 9.

Des communications fluidiques 10,11 sont ménagées entre les moules 2,3 de façon que lorsque l'un des moules 2 se trouve dans la zone de dégazage 6, le gaz, généralement de l'air, qui est expulsé, du seul fait de la pression à laquelle il se trouve, du récipient soufflé dans ledit moule, est dirigé dans le récipient fabriqué préalablement dans l'autre moule 3. Par ailleurs, il est bien entendu que les communications 10,11 sont agencées pour que, lors de l'étape de soufflage proprement dite, lorsqu'un moule se trouve donc dans la zone 5 de soufflage, le gaz de soufflage ne s'échappe pas vers le récipient précédemment soufflé qui lui se trouve alors entre la zone 6 de dégazage et la zone 7 d'injection du gaz à la seconde pression. A cet effet, l'installation comporte des vannes 12,13 à commande électrique ou pneumatique ou mécanique ou autre, qui sont disposées dans les circuits de communication fluidique, de façon à réaliser les transferts de gaz aux moments appropriés.

Ainsi, dans l'exempl de la figure 1, une première communication 10 est utilisée pour le transfert du gaz de dégazage contenu dans le récipient 200 soufflé dans le moule 2 vers le récipient 300 contenu dans le moule 3. Une première vanne 12 est associée à ce circuit de communication et est pilotée par des moyens, non représentés, de façon que le circuit 10 soit ouvert seulement lorsque le moule 2 est dans la zone 6 de dégazage. Une seconde communication 11 est utilisée pour le transfert du produit de dégazage du récipient 300 du moule 3 vers le récipient 200 du moule 2 et une vanne 13 est associée à ce circuit. Cette vanne 13 est pilotée de façon que le circuit 11 soit ouvert lorsque le moule 3 est dans la zone 6 de dégazage. Plus particulièrement, sur la figure 1, le moule 2 est représenté alors qu'il se trouve dans la zone 6 de dégazage. La vanne 12 est donc ouverte pour laisser passer le gaz contenu dans le récipient 200 fabriqué dans ce moule et le transférer vers le récipient 300 enfermé dans le moule 3 qui lui se trouve dans la zone 7 d'injection du gaz à la seconde pression. Ce transfert est illustré par la flèche 14 sur la figure.

L'ouverture et la fermeture des vannes 12,13 peuvent être commandées à l'aide de capteurs de position des moules 2,3 respectifs par rapport aux zones de l'installation. Ce n'est que lorsqu'un moule est dans la zone 6 de dégazage que la commmunication vers l'autre moule est autorisée. De nombreux types de capteurs sont utilisables (électriques, électroniques, électromagnétiques, mécaniques ou autres).

Dans une mise en oeuvre particulièrement avantageuse et préférée, la commande des vannes 12,13 est effectuée par l'intermédiaire des organes connus de commande du dégazage qui sont présents par ailleurs, y compris dans les installations ne mettant pas en oeuvre l'invention.

Par ailleurs, lorsque l'injection à la seconde pression assure un balayage de l'intérieur du récipient, des moyens sont prévus pour permettre une circulation de gaz entre l'intérieur du récipient et l'air libre.

Dans le cas d'une installation d'injection-soufflage, la circulation de l'intérieur vers l'extérieur peut s'effectuer, de façon connue, en remontant la tuyère de soufflage pendant le balayage, de façon à dégager l'ouverture (le col) du récipient sur lequel cette tuyère prend appui de façon étanche pendant le soufflage.

Dans une variante, on prévoit que la tuyère n'est pas remontée, mais est associée à un circuit de communication permettant un échappement du gaz vers l'extérieur pendant le balayage.

Dans le cas d'une installation de fabrication par extrusion-soufflage, il est possible de modifier les circuits fluidiques existants pour permettre le transfert de l'air de dégazage contenu dans un récipient vers un autre récipient d'un autre moule et, éventuellement, un balayage en autorisant un échappement.

La figure 2 montre comment l'invention est applicable à une installation comportant plus de deux moules.

Un carrousel 15 entraîne, flèche 16, quatre moules de soufflage, 17, 18, 19, 20, pour obtenir des récipients 21 à partir de préformes 22. Les préformes, après réchauffage, sont chargées successivement dans les moules, dans une zone de chargement 23 et les récipients sont sortis dans une zone 24 de déchargement.

Des conduits 26, 27, 28, 29 sont disposés entre les moules : 26 relie les moules 17 et 18, 27 relie les moules 18 et 19, 28 relie les moules 19 et 20, et 29 relie enfin les moules 20 et 17 pour que, lorsqu'un récipient est en cours de dégazage, son contenu soit transféré, au moins en partie, dans le récipient précédent qui a lui-même été dégazé, permettant par exemple un balayage de ce récipient précédent.

Dans l'exemple, un récipient 30 est en cours de soufflage dans le moule 17; un récipient 31 est terminé dans le moule 18, et le gaz qu'il contient est en cours de transfert vers le récipient 32 soufflé dans le moule 19. Préalablement, le contenu du récipient 32 avait été transféré dans le récipient 33, formé dans le moule 20, et parvenu en zone 24 de déchargement.

Ainsi, sur la figure 2, un transfert s'effectue entre le récipient 31 et le récipient 32. Ceci est symbolisé par la flèche 34 près du conduit 27.

Le transfert du gaz d'un récipient à l'autre est autorisé ou interdit par des vannes 35, 36, 37, 38 qui sont ouvertes ou fermées à des moments appropriés.

Ainsi, dans l'exemple, la vanne 35, sur le conduit 27 est ouverte et les vannes 36, 37, 38, sur les conduits 26, 28, 29 sont fermées.

L'ouverture ou la fermeture est commandée soit mécaniquement (cames, galets, etc) soit électriquement.

Dans une réalisation avantageuse, la commande des vannes s'effectue à l'aide des organes de commande du dégazage présents sur ce type d'installation, et non représentés ici. La vanne 35 est commandée avec l'organe de commande du dégazage du moule 18; les vannes 36, 37, 38, sont respectivement commandées par les organes de commande du dégazage des moules 17, 19, 20.

Dans une mise en oeuvre, le procédé comporte une phase d'étirage et de soufflage de l'ébauche ou du récipient en cours de soufflage à l'aide de moyens d'étirage, tels qu'une tige d'étirage, et l'introduction du gaz sous la seconde pression s'effectue au travers de ces moyens, qui sont alors pourvus de canaux et d'orifices de circulation du gaz.

Dans ce cas, les moyens d'étirage peuvent être agencés pour que ce soit principalement le fond du récipient qui reçoive le flux de gaz.

Bien entendu, l'invention n'est pas limitée aux modes de réalisation décrits. Elle en embrasse au contraire toutes les variantes comprises dans le cadre défini par les revendications.

## Revendications

1. Procédé de fabrication de récipients (200, 300, 800) par soufflage, à l'aide de gaz sous pression, en particulier de l'air, d'ébauches (22, 400) en matériau thermoplastique à l'intérieur de moules (2, 3, 17, ... 20) de finition dans une installation comportant au moins deux moules de finition dans lesquels les ébauches sont successivement introduites et les récipients sont successivement soufflés, le soufflage de chaque récipient comportant, après une étape (5) de soufflage, à l'aide d'un gaz sous une première pression (P1), une étape (6) de dégazage au moins partiel, suivie d'une étape (7) au cours de laquelle du gaz sous une seconde pression (P2), inférieure à la première (P1), est introduit dans le récipient, **caractérisé en ce que** le gaz sous la seconde pression (P2) introduit dans un récipient considéré est constitué par au moins une partie du produit de dégazage d'au moins un récipient soufflé postérieurement dans l' installation.

2. Procédé selon la revendication 1, **caractérisé en ce que** le gaz sous la seconde pression (P2) introduit dans un récipient formé dans un moule est le produit de l'étape de dégazage d'un récipient formé dans le moule suivant immédiatement dans l'installation.

3. Procédé selon la revendication 1, **caractérisé en ce que**, l'installation comportant au moins trois moules de finition, il est provoqué une introduction en cascade du produit de dégazage d'un récipient fabriqué dans un moule considéré dans au moins deux récipients soufflés dans au moins deux moules précédant ledit moule considéré dans l'installation.

4. Procédé selon la revendication 2, **caractérisé en ce que**, l'étape d'introduction du gaz sous la seconde pression consistant à balayer l'intérieur du récipient, c'est-à-dire à laisser le gaz circuler librement dans le récipient, un échappement à l'air libre est réalisé de l'intérieur vers l'extérieur du récipient pendant le balayage.

5. Procédé selon la revendication 3, **caractérisé en ce que**, l'étape d'introduction du gaz sous la seconde pression ayant pour fonction de balayer l'intérieur des récipients en cascade, c'est-à-dire de laisser le gaz circuler librement dans les récipients, un échappement à l'air libre est réalisé de l'intérieur vers l'extérieur du récipient en cascade le plus éloigné de celui où débute le dégazage.

6. Procédé selon l'une quelconque des revendications précédentes, **caractérisé en ce que**, chaque moule comportant au moins deux cavités de soufflage, permettant ainsi d'y souffler au moins deux récipients, le produit de dégazage d'un récipient fabriqué dans une cavité d'un moule est transféré dans au moins un récipient fabriqué dans une cavité correspondante d'un moule précédent.

7. Procédé selon l'une des revendications précédentes, **caractérisé en ce que** les cavités correspondantes de deux moules successifs sont isolées lorsqu'il n'est pas nécessaire de transférer du produit de dégazage de l'une vers l'autre.

8. Procédé selon l'une des revendications 4 ou 5 **caractérisé en ce qu'**il comporte une phase d'étirage de l'ébauche ou du récipient en cours de soufflage à l'aide de moyens d'étirage, tels qu'une tige d'étirage, et l'introduction du gaz sous la seconde pression (P2) s'effectue au travers de ces moyens qui sont pourvus de canaux et d'orifices de circulation du gaz.

9. Procédé selon la revendication 8, **caractérisé en ce que** les moyens d'étirage sont agencés pour que ce soit principalement le fond du récipient qui reçoive le flux de gaz.

10. Installation de fabrication de récipients pour la mise en oeuvre de procédé selon l'une quelconque des revendications 1 à 9, qui comporte au moins deux moules de soufflage et des communications fluidiques (10, 11) ménagées entre les moules et agencées pour que, lorsqu'un récipient soufflé dans un moule est en cours de dégazage, au moins une partie du gaz qu'il contient est dirigée vers un récipient préalablement fabriqué dans un autre moule, et en outre agencées pour que, lorsqu'un récipient est en cours de soufflage, le gaz de soufflage ne s'échappe pas vers un récipient préalablement soufflé.

11. Installation selon la revendication 10, **caractérisée en ce qu'**elle comporte au moins un carrousel (1, 15) sur lequel sont montés au moins deux moules (2, 3, 17, 18, 19, 20) pour le soufflage des récipients, le carrousel étant animé d'un mouvement (9, 16) de rotation continu lors de la fabrication des récipients; **en ce qu'**elle comprend en outre une zone (4, 23) dans laquelle les ébauches sont introduites dans les moules, une zone (5) de soufflage des récipients à la première pression (P1), une zone (6) de dégazage au moins partiel des récipients, une zone (7) d'introduction d'au moins une partie du produit de dégazage d'un récipient fabriqué dans un moule à l'intérieur d'un récipient fabriqué dans un autre moule et une zone (8, 24) d'éjection des récipients (21).

12. Installation selon l'une des revendications 10 ou 11, **caractérisée en ce que** les ébauches sont des paraisons extrudées et l'installation comporte un dispositif d'extrusion desdites paraisons.

13. Installation selon l'une des revendications 10 ou 11 **caractérisé en ce que** les ébauches sont des préformes obtenues par injection, et l'installation comporte un dispositif d'introduction des préformes dans les moules.

14. Installation selon l'une des revendications 10 ou 11, **caractérisée en ce que** les ébauches sont des récipients intermédiaires obtenus par soufflage de préformes préalablement injectées.

15. Installation selon l'une des revendications 10 ou 11 **caractérisée en ce que** les ébauches sont des récipients intermédiaires obtenus par soufflage de paraisons préalablement extrudées.

## Claims

1. Process for manufacturing containers (200, 300, 800) by blow moulding preforms (22, 400) made of a thermoplastic, inside finishing moulds (2, 3, 17, ... 20) by means of pressurized gas, particularly air, in a plant comprising at least two finishing moulds into which the preforms are introduced in succession and the containers are blow-moulded in succession, the blow-moulding of each container comprising, after a blowing step (5), by means of a gas under a first pressure (P1), an at least partial venting step (6) followed by a step (7) during which gas at a second pressure (P2), lower than the first (P1), is introduced into the container, **characterized in that** the gas at the second pressure (P2) introduced into a container in question consists of at least some of the venting product from at least one container blow-moulded subsequently in the plant.

2. Process according to Claim 1, **characterized in that** the gas at the second pressure (P2) introduced into a container formed in a mould is the product from the step of venting a container formed in the immediately following mould in the plant.

3. Process according to Claim 1, **characterized in that**, with the plant having at least three finishing moulds, the venting product from a container manufactured in a mould in question is introduced in cascade into at least two containers blow-moulded in at least two moulds preceding the said mould in question in the plant.

4. Process according to Claim 2, **characterized in that**, when the step of introducing the gas at the second pressure consists in purging the inside of the container, that is to say in letting the gas circulate freely within the container, the gas is made to escape to the open air from the inside to the outside of the container during the purging.

5. Process according to Claim 3, **characterized in that**, when the step of introducing the gas at the second pressure has the function of purging the inside of the containers in cascade, that is to say of letting the gas circulate freely within the containers, the gas is made to escape to the open air from the inside to the outside of the container in cascade the furthest away from the one in which the venting started.

6. Process according to any one of the preceding claims, **characterized in that**, when each mould has at least two blow-moulding cavities, thus allowing at least two containers to be blow-moulded therein, the venting product from a container manufactured in one cavity of a mould is transferred into at least one container manufactured in a corresponding cavity of a preceding mould.

7. Process according to one of the preceding claims, **characterized in that** the corresponding cavities of two successive moulds are isolated when it is necessary to transfer venting product from one to the other.

8. Process according to either of Claims 4 and 5, **characterized in that** it includes, during blowing, a phase of stretching the preform or the container with the aid of stretching means, such as a stretching rod, and the introduction of the gas at the second pressure (P2) takes place through these means, which are provided with gas circulation orifices and channels.

9. Process according to Claim 8, **characterized in that** the stretching means are arranged so that it is mainly the bottom of the container which receives the stream of gas.

10. Container manufacturing plant for implementing the process according to any one of Claims 1 to 9, which comprises at least two blow-moulding moulds and fluid communications (10, 11) which are made between the moulds and arranged so that, when a container blow-moulded in one mould is undergoing venting, at least some of the gas that it contains is directed towards a container manufactured beforehand in another mould, and which are furthermore arranged so that, when one container is undergoing blow moulding, the blowing gas does not escape towards a previously blow-moulded container.

11. Plant according to Claim 10, **characterized in that** it comprises at least one carousel (1, 15) on which at least two moulds (2, 3, 17, 18, 19, 20) for blow-moulding the containers are mounted, the carousel undergoing a continuous rotational movement (9, 16) during manufacture of the containers and **in that** it furthermore includes a zone (4, 23) in which the preforms are introduced into the moulds, a zone (5) for blow-moulding the containers at the first pressure (P1), a zone (6) for at least partially venting the containers, a zone (7) for introducing at the some of the venting gas from a container manufactured in a mould into a container manufactured in another mould and a zone (8, 24) for ejecting the containers (21).

12. Plant according to either of Claims 10 and 11, **characterized in that** the preforms are extruded parasions and the plant includes a device for extruding the said parasions.

13. Plant according to either of Claims 10 and 11 **characterized in that** the preforms are preforms obtained by injection moulding and the plant includes a device for introducing the injection-moulded preforms into the moulds.

14. Plant according to either of Claims 10 and 11, **characterized in that** the preforms are intermediate containers obtained by blow moulding previously injection-moulded preforms.

15. Plant according to either of Claims 10 and 11, **characterized in that** the preforms are intermediate containers obtained by blow moulding previously extruded parasions.

## Patentansprüche

1. Verfahren zur Herstellung von Behältern (200, 300, 800) durch Blasformen mit Hilfe von druckbeaufschlagtem Gas, insbesondere Luft, Blasformrohlingen (22, 400) aus thermoplastischem Material im Inneren von Endbearbeitungsformwerkzeugen (2, 3, 17, ... 20) in einer Anlage, die mindestens zwei Endbearbeitungsformwerkzeuge enthält, in die die Blasformrohlinge nacheinander eingeführt und worin die Behälter nacheinander blasgeformt werden, wobei das Blasformen jedes Behälters nach einem Blasformschritt (5) mit Hilfe eines unter einem ersten Druck (P1) stehenden Gases einen Schritt (6) der zumindest teilweisen Entgasung umfaßt, an den sich ein Schritt (7) anschließt, im Verlaufe dessen unter einem zweiten Druck (P2), der unter dem ersten (P1) liegt, stehendes Gas in den Behälter eingeführt wird, **dadurch gekennzeichnet, daß** das in einen betrachteten Behälter eingeführte, unter dem zweiten Druck (P2) stehende Gas aus mindestens einem Teil des Entgasungsprodukts des mindestens einen später in der Anlage blasgeformten Behälters besteht.

2. Verfahren nach Anspruch 1, **dadurch gekennzeichnet, daß** das in einen in einem Formwerkzeug gebildeten Behälter eingeführte, unter dem zweiten Druck (P2) stehende Gas das Produkt des Schritts der Entgasung eines im unmittelbar folgenden Formwerkzeug in der Anlage gebildeten Behälters ist.

3. Verfahren nach Anspruch 1, **dadurch gekennzeichnet, daß**, wenn die Anlage mindestens drei Endbearbeitungsformwerkzeuge umfaßt, eine aufeinanderfolgende Einleitung des Entgasungsprodukts eines in einem betrachteten Formwerkzeug gefertigten Behälters in mindestens zwei in mindestens zwei dem betrachteten Formwerkzeug in der Anlage vorangehenden Formwerkzeugen blasgeformte Behälter bewirkt wird.

4. Verfahren nach Anspruch 2, **dadurch gekennzeichnet, daß**, wenn der Schritt der Einleitung des unter dem zweiten Druck stehenden Gases darin besteht, den Innenraum des Behälters zu spülen, das heißt das Gas im Behälter frei zirkulieren zu lassen, ein Entweichen an die Umgebungsluft vom Innenraum des Behälters nach außen während des Spülens bewirkt wird.

5. Verfahren nach Anspruch 3, **dadurch gekennzeichnet, daß**, wenn der Schritt der Einleitung des unter dem zweiten Druck stehenden Gases den Innenraum der aufeinanderfolgenden Behälter spülen soll, das heißt das Gas in den Behältern frei zirkulieren lassen soll, ein Ausströmen an die Umgebungsluft vom Innenraum des nachfolgenden Behälters, der von dem am weitesten enfernt ist, bei dem die Entgasung beginnt, nach außen bewirkt wird.

6. Verfahren nach einem der vorhergehenden Ansprüche, **dadurch gekennzeichnet, daß**, wenn jedes Formwerkzeug mindestens zwei Blasformhöhlungen aufweist, wodurch gestattet wird, dort mindestens zwei Behälter blaszuformen, das Entgasungsprodukt eines in einer Höhlung eines Formwerkzeugs hergestellten Behälters in mindestens einen Behälter übertragen wird, der in einer entsprechenden Höhlung eines vorhergehenden Formwerkzeugs hergestellt wurde.

7. Verfahren nach einem der vorhergehenden Ansprüche, **dadurch gekennzeichnet, daß** die entsprechenden Höhlungen von zwei aufeinanderfolgenden Formwerkzeugen getrennt sind, wenn es nicht erforderlich ist, das Entgasungsprodukt von dem einen zum anderen zu übertragen.

8. Verfahren nach Anspruch 4 oder 5, **dadurch gekennzeichnet, daß** es eine Phase des Reckens des Blasformrohlings oder des Behälters im Verlauf des Blasformens mittels Reckmitteln, wie zum Beispiel einer Reckstange, umfaßt, und die Einleitung des unter dem zweiten Druck (P2) stehenden Gases durch diese Mittel erfolgt, die mit Kanälen und Öffnungen zur Zirkulation des Gases versehen sind.

9. Verfahren nach Anspruch 8, **dadurch gekennzeichnet, daß** die Reckmittel so angeordnet sind, daß in erster Linie der Boden des Behälters den Gasstrom erhält.

10. Anlage zur Herstellung von Behältern zur Durchführung des Verfahrens gemäß einem der Ansprüche 1 bis 9, die mindestens zwei Blasformwerkzeuge und Fluidverbindungen (10, 11) umfaßt, die zwischen den Formwerkzeugen ausgebildet und so angeordnet sind, daß, wenn ein in einem Formwerkzeug blasgeformter Behälter gerade entgast wird, mindestens ein Teil des Gases, das in ihm enthalten ist, zu einem zuvor in einem anderen Formwerkzeug hergestellten Behälter geleitet wird, und des weiteren so angeordnet sind, daß, wenn ein Behälter gerade blasgeformt wird, das Blasgas nicht zu einem zuvor blasgeformten Behälter strömt.

11. Anlage nach Anspruch 10, **dadurch gekennzeichnet, daß** sie mindestens ein Karussell (1, 15) umfaßt, auf dem mindestens zwei Formwerkzeuge (2, 3, 17, 18, 19, 20) für das Blasformen der Behälter montiert sind, wobei das Karussell bei der Herstellung der Behälter mit einer kontinuierlichen Drehbewegung (9, 16) bewegt wird; daß sie des weiteren einen Bereich (4, 23), in dem die Blasformrohlinge in die Formwerkzeuge eingeführt werden, einen Bereich (5) zum Blasformen der Behälter auf dem ersten Druck (P1), einen Bereich (6) zur zumindest teilweisen Entgasung der Behälter, einen Bereich (7) zur Einleitung mindestens eines Teils des Entgasungsprodukts eines in einem Formwerkzeug hergestellten Behälters in den Innenraum eines in einem anderen Formwerkzeug hergestellten Behälters und einen Bereich (8, 24) zum Ausstoßen der Behälter (21) umfaßt.

12. Anlage nach Anspruch 10 oder 11, **dadurch gekennzeichnet, daß** die Blasformrohlinge extrudierte Vorpreßlinge sind und die Anlage eine Vorrichtung zur Extrusion der Vorpreßlinge umfaßt.

13. Anlage nach Anspruch 10 oder 11, **dadurch gekennzeichnet, daß** die Blasformrohlinge durch Spritzgießen erhaltene Vorformlinge sind und die Anlage eine Vorrichtung zur Einleitung der Vorformlinge in die Formwerkzeuge enthält.

14. Anlage nach Anspruch 10 oder 11, **dadurch gekennzeichnet, daß** die Blasformrohlinge durch Blasformen von zuvor spritzgegossenen Vorformlingen erhaltene Zwischenbehälter sind.

15. Anlage nach Anspruch 10 oder 11, **dadurch gekennzeichnet, daß** die Blasformrohlinge durch Blasformen von zuvor extrudierten Vorpreßlingen erhaltene Zwischenbehälter sind.
